# EUROPÄISCHE PATENTSCHRIFT

(11) **EP 4 430 333 B1**
(45) Veröffentlichungstag und Bekanntmachung des Hinweises auf die Patenterteilung: **10.09.2025**
(21) Anmeldenummer: 22822878.9
(22) Anmeldetag: 22.11.2022
(51) Int. Cl.: F16L 5/02, F16L 5/10, H02G 3/04, H02G 3/06

(54) **DICHTUNGSTÜLLENANORDNUNG**
SEALING GROMMET ARRANGEMENT
AGENCEMENT DE PASSE-CÂBLE D'ÉTANCHÉITÉ

(30) Priorität: 23.11.2021 DE 102021130679
(43) Veröffentlichungstag der Anmeldung: 18.09.2024
(73) Patentinhaber: STABILUS GmbH, 56070 Koblenz (DE)
(72) Erfinder: THEIS, Christof, 56204 Hillscheid (DE); EINIG, Christian, 56761 Brachtendorf (DE); KRONZ, Kathrin, 56858 Mittelstrimmig (DE); KNOPP, Axel, 56337 Eitelborn (DE); KESSLER, Jonathan, 56459 Gemünden (DE); BOCHEN, Jan, 56337 Eitelborn (DE)
(74) Vertreter: Bernsmann, Falk
(86) Internationale Anmeldenummer: PCT/EP2022/082882
(87) Internationale Veröffentlichungsnummer: WO 2023/094408

(56) Entgegenhaltungen:
- WO-A1-2012/074443
- DE-A1- 102009 009 990
- DE-A1- 102011 085 398
- DE-U1- 20 011 757
- US-B2- 8 505 982

## Beschreibung

Die Erfindung bezieht sich auf eine Dichtungstüllenanordnung mit einer als Wellrohr konstantem Außendurchmessers über seine Länge ausgebildeten Dichtungstülle, die mit ihrem einen Ende eine Öffnung in einer Gehäusewand durchragt und auf der ein Haltering zur Halterung der Dichtungstülle an der Gehäusewand angeordnet ist, der mit einem radial inneren Bereich radial nach innen in ein Wellental der Dichtungstülle ragt und der die Öffnung in der Gehäusewand verschließend mit der Gehäusewand verbindbar ist.

Bei einer derartigen Dichtungstüllenanordnung ist es bekannt, daß ein Haltering mit einer Rastnase in ein Wellental des Wellrohres eingreift und mittels eines Sicherungsrings mit der Gehäusewand verbunden und in seiner Position gehalten ist. Diese Dichtungstüllenanordnung weist einen aufwendigen Aufbau auf und ist nur mit erheblichem Montageaufwand montierbar.

Aus WO 2012/074443 A1 ist eine Dichtungstüllenanordnung nach der Präambel des Anspruchs 1 bekannt.

Aufgabe der Erfindung ist es daher eine Dichtungstüllenanordnung der eingangs genannten Art zu schaffen, die bei einfachem Aufbau und einfacher Montage dieselbe Dichtungstülle für unterschiedliche aus der Öffnung der Gehäusewand herausragende Längen der Dichtungstülle ermöglicht.

Diese Aufgabe wird erfindungsgemäß dadurch gelöst, daß der Haltering eine zentrische Durchgangsöffnung aufweist mit deren Innenkontur der Haltering in ein Wellental der Dichtungstülle ragt, wobei die Dichtungstülle aus einem derart elastisch verformbaren Werkstoff besteht, daß der Haltering durch eine bestimmte axiale Mindestkraftbeaufschlagung die Dichtungstülle elastisch verformend von einem Wellental in ein benachbartes Wellental bewegbar ist.

Diese Ausbildung ermöglicht es ein und dieselbe Dichtungstülle bei unterschiedlich erforderlichen von der Gehäusewand hervorstehenden Längen der Dichtungstülle zu verwenden, indem der Haltering durch Verschieben auf der Dichtungstülle in ein Wellental bewegt wird, das der jeweils gewünschten aus der Öffnung der Gehäusewand herausragenden Länge der Dichtungstülle entspricht. Dazu sind keine zusätzlichen Bauteile oder speziellen Werkzeuge erforderlich.

Bei gleicher Tülle kann auch der Haltering mit unterschiedlichem Außendurchmesser ausgebildet werden, so daß die gleiche Dichtungstülle bei Öffnungen unterschiedlichen Durchmessers in der Gehäusewand angewandt werden kann.

Auf diese Weise ist der Lager- und Logistikaufwand für die Lagertüllen wesentlich reduziert wird.

Da für verschiedene Anwendungen dieselbe Dichtungstülle angewendet werden kann, ist für ihre Herstellung nur ein einziges Werkzeug erforderlich.

Ist der Haltering mit der Innenkontur seiner Durchgangsöffnung in dem Wellental der Dichtungstülle in Anlage, so ist der Haltering spielfrei auf der Dichtungstülle gehalten.

Unabhängig von seiner Drehposition und damit montageerleichternd kann der Haltering auf der Dichtungstülle angeordnet werden, wenn die Durchgangsöffnung des Halterings eine kreisförmige Kontur aufweist.

Ist der Haltering mit der Innenkontur seiner Durchgangsöffnung mit Vorspannung an der Außenkontur des Wellentales in Anlage, so sitzt der Haltering dicht auf der Dichtungstülle.

Die Dichtungstülle kann an einem ihrer Endbereiche eine Greifkontur aufweisen, an der die Dichtungstülle z.B. manuell greifbar und axial kraftbeaufschlagbar ist.

Dies ermöglicht es durch Ziehen an der Greifkontur den Haltering in seine jeweils gewünschte Position auf der Dichtungstülle zu ziehen.

Zur Sicherung des Halterings an der Gehäusewand kann der Haltering an seinem äußeren radial umlaufenden Bereich mit einer mit der Gehäusewand verbindbaren Verbindungsstruktur versehen sein.

In einfacher Ausbildung kann dabei die Verbindungsstruktur eine radial umlaufende, radial nach außen offene Ringnut sein, die eine der Wanddicke der Gehäusewand entsprechenden Nutbreite und einen dem Durchmesser der Öffnung in der Gehäusewand entsprechenden Durchmesser am Boden der Ringnut aufweist.

Besteht dabei der Haltering aus einem elastisch verformbaren Werkstoff und ist mit seiner Ringnut in die Öffnung der Gehäusewand einrastbar, so ist der Haltering durch einfaches Einrasten in die Öffnung in der Gehäusewand mit dieser verbindbar.

Weist der Haltering an seiner radial umlaufenden äußeren Peripherie eine radial umlaufende Dichtlippe auf, so liegt er im eingebauten Zustand dichtend an der Gehäusewand an.

Ist dabei die Dichtlippe elastisch ausgebildet und mit ihrem radial inneren Bereich mit der der Gehäusewand entfernteren Nutwand der Ringnut verbunden sowie mit ihrem freiragenden radial äußeren Bereich zur Gehäusewand geneigt, so liegt der Haltering im an die Gehäusewand angebauten Zustand die Dichtwirkung erhöhend mit Vorspannung an der Gehäusewand an.

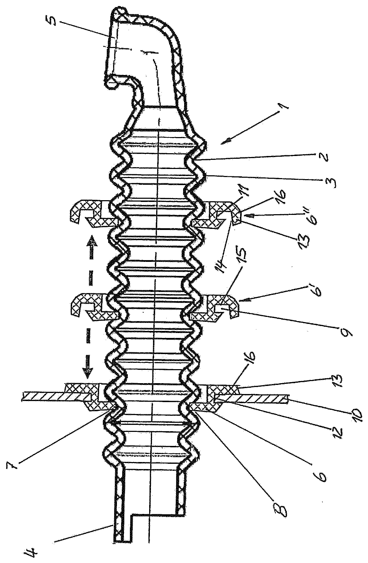

Ein Ausführungsbeispiel der Erfindung ist in der Zeichnung dargestellt und wird im Folgenden näher beschrieben. Die einzige Figur der Zeichnung zeigt eine Dichtungstüllenanordnung im Längsschnitt.

Die in der Figur dargestellte Dichtungstüllenanordnung weist eine Dichtungstülle 1 auf, die als Wellrohr konstanten Durchmessers über seine Länge mit alternierend Wellentälern 2 und Wellenhöhen 3 ausgebildet ist.

Die Dichtungstülle besteht aus einem elastischen Werkstoff.

An ihrem linken Ende ist die Dichtungstülle 1 mit einer Lasche 4 als Greifkontur versehen, während sie an ihrem rechten Ende einen abgeknickten Stutzen 5 aufweist.

Es versteht sich, daß der Stutzen jede andere Form aufweisen kann. So kann er sich gerade zur Dichtungstülle erstrecken oder sogar flexibel in jede Richtung abbiegbar ausgebildet sein.

In ihrem linken Endbereich ist ein Haltering 6 mit seiner zentrischen Durchgangsöffnung 7 in einem Wellental 2 die Dichtungstülle 1 mit ihrer Innenkontur 8 umschließend angeordnet. Dabei liegt der Haltering 6 mit der Innenkontur 8 seiner Durchgangsöffnung 7 mit Vorspannung an der Außenkontur des Wellentals 2 an der Dichtungstülle 1 an.

Im linken Endbereich der Dichtungstülle 1 ist der Haltering 6 in einem an eine Gehäusewand 10 angebauten Zustand dargestellt, während rechts davon gleiche Halteringe 6' und 6" in zwei anderen möglichen Positionen auf der Dichtungstülle 1 dargestellt sind.

Der Haltering 6, 6', 6" weist an seinem äußeren radial umlaufenden Bereich eine radial umlaufende, radial nach außen offene Ringnut 9 auf, die eine Nutbreite aufweist, welche der Wanddicke der Gehäusewand 10 entspricht.

Am Boden 11 der Ringnut 9 weist diese einen Durchmesser auf, der dem Durchmesser einer Öffnung 12 in der Gehäusewand 10 entspricht.

Der Haltering 6,6' 6" besteht aus einem elastischen Werkstoff und ist durch Überrasten über mehrere Wellenhöhen 3 der Dichtungstülle 1 auf dieser positioniert. Durch Einrasten mit seiner Ringnut 9 in die Öffnung 12 der Gehäusewand 10 ist der Haltering 6 zusammen mit der Dichtungstülle 1 an der Gehäusewand 10 befestigt.

An seiner radial äußeren Peripherie ist der Haltering 6, 6' 6" mit einer radial umlaufenden Dichtlippe 13 versehen, die mit ihrem radial inneren Bereich 14 mit der der Gehäusewand 10 entfernteren Nutwand 15 der Ringnut 9 verbunden ist. Mit ihrem freiragenden radial äußeren Bereich 16 ist die Dichtlippe 13 im nicht in die Gehäusewand 10 eingebauten Zustand zur Gehäusewand 10 hin geneigt.

Im in die Gehäusewand 10 eingebauten Zustand des Halterings 6 ist die Dichtlippe 13 in radiale Richtung nach außen verformt und liegt mit dichtender Vorspannung an der Gehäusewand 10 an.

### Bezugszeichenliste

- 1: Dichtungstülle
- 2: Wellentäler
- 3: Wellenhöhen
- 4: Lasche
- 5: Stutzen
- 6: Haltering
- 7: Durchgangsöffnung
- 8: Innenkontur
- 9: Ringnut
- 10: Gehäusewand
- 11: Boden
- 12: Öffnung
- 13: Dichtlippe
- 14: radial innerer Bereich
- 15: Nutwand
- 16: radial äußerer Bereich

## Patentansprüche

1. Dichtungstüllenanordnung mit einer als Wellrohr konstanten Außendurchmessers über seine Länge ausgebildeten Dichtungstülle (1),
a. die mit ihrem einen Ende eine Öffnung (12) in einer Gehäusewand (10) durchragt und
b. auf der ein Haltering (6) zur Halterung der Dichtungstülle (1) an der Gehäusewand (10) angeordnet ist, der mit der Innenkontur seiner Durchgangsöffnung (7) radial nach innen in ein Wellental (2) der Dichtungstülle (1) ragt und der die Öffnung (12) in der Gehäusewand (10) verschließend mit der Gehäusewand (10) verbindbar ist,
c. wobei der Haltering (6) eine zentrische Durchgangsöffnung (7) aufweist, mit deren Innenkontur (8) der Haltering (6) in ein Wellental (2) der Dichtungstülle (1) ragt,
d. wobei die Dichtungstülle (1) aus einem derart elastisch verformbaren Werkstoff besteht, dass der Haltering (6) durch eine bestimmte axiale Mindestkraftbeaufschlagung die Dichtungstülle (1) elastisch verformend von einem Wellental (2) in ein benachbartes Wellental (2) bewegbar ist,
e. wobei der Haltering (6) an seiner radial umlaufenden äußeren Peripherie eine radial umlaufende Dichtlippe (13) aufweist,
f. wobei die Dichtlippe (13) elastisch ausgebildet ist und mit ihrem radial inneren Bereich (14) mit der der Gehäusewand (10) entfernteren Nutwand (15) der Ringnut (9) verbunden ist,
**dadurch gekennzeichnet,**
g. **dass** die Dichtlippe (13) in einem nicht in die Gehäusewand (10) eingebauten Zustand des Halterings (6) mit ihrem freiragenden radial äußeren Bereich zur Gehäusewand (10) geneigt ist, und
h. **dass** die Dichtlippe (13) in einem in die Gehäusewand (10) eingebauten Zustand des Halterings (6) in radialer Richtung nach außen verformt ist und mit dichtender Vorspannung an der Gehäusewand (10) anliegt.

2. Dichtungstüllenanordnung nach einem der vorhergehenden Ansprüche,
**dadurch gekennzeichnet, dass** der Haltering (6) mit der Innenkontur (8) seiner Durchgangsöffnung (7) in dem Wellental (2) der Dichtungstülle (1) in Anlage ist.

3. Dichtungstüllenanordnung nach Anspruch 2,
**dadurch gekennzeichnet, dass** die Durchgangsöffnung (7) des Halterings (6) eine kreisförmige Kontur aufweist.

4. Dichtungstüllenanordnung nach einem der Ansprüche 2 und 3,
**dadurch gekennzeichnet, dass** der Haltering (6) mit der Innenkontur (8) seiner Durchgangsöffnung (7) mit Vorspannung an der Außenkontur des Wellentales (2) in Anlage ist.

5. Dichtungstüllenanordnung nach einem der vorhergehenden Ansprüche,
**dadurch gekennzeichnet, dass** die Dichtungstülle (1) an einem ihrer Endbereiche eine Greifkontur aufweist, an der die Dichtungstülle (1) greifbar und axial kraftbeaufschlagbar ist.

6. Dichtungstüllenanordnung nach einem der vorhergehenden Ansprüche,
**dadurch gekennzeichnet, dass** der Haltering(6) an seinem äußeren radial umlaufenden Bereich mit einer mit der Gehäusewand (10) verbindbaren Verbindungsstruktur versehen ist.

7. Dichtungstüllenanordnung nach Anspruch 6,
**dadurch gekennzeichnet, dass** die Verbindungsstruktur eine radial umlaufende, radial nach außen offene Ringnut (9) ist, die eine der Wanddicke der Gehäusewand (10) entsprechenden Nutbreite und einen dem Durchmesser der Öffnung (12) in der Gehäusewand (10) entsprechenden Durchmesser am Boden (11) der Ringnut (9) aufweist.

8. Dichtungstüllenanordnung nach Anspruch 7,
**dadurch gekennzeichnet, dass** der Haltering (6) aus einem elastisch verformbaren Werkstoff besteht und mit seiner Ringnut (9) in die Öffnung(12) der Gehäusewand (10) einrastbar ist.

## Claims

1. A sealing grommet arrangement having a sealing grommet (1) which is designed as a corrugated tube of constant external diameter over its length,
a. which projects with its one end through an opening (12) in a housing wall (10) and
b. on which a retaining ring (6) for retaining the sealing grommet (1) on the housing wall (10) is arranged, wherein the retaining ring (6) projects with the inner contour of its through-opening (7) radially inwards into a corrugation trough (2) of the sealing grommet (1) and wherein the retaining ring (6) can be connected to the housing wall (10) so as to close the opening (12) in the housing wall (10),
c. wherein the retaining ring (6) has a central through-opening (7) with the inner contour (8) of which the retaining ring (6) projects into a corrugation trough (2) of the sealing grommet (1),
d. wherein the sealing grommet (1) consists of an elastically deformable material such that the retaining ring (6) can be moved elastically deforming the sealing grommet (1) from one corrugation trough (2) into an adjacent corrugation trough (2) by applying a certain minimum axial force,
e. wherein the retaining ring (6) has a radially surrounding sealing lip (13) on its radially surrounding outer periphery,
f. wherein the sealing lip (13) is elastic, and the sealing lip (13) is connected with its radially inner region (14) to the groove wall (15) of the annular groove (9) which is remote from the housing wall (10),
**characterised in that**
g. the sealing lip (13) is inclined with its freely projecting radially outer region towards the housing wall (10) when the retaining ring (6) is not installed in the housing wall (10), and
h. that the sealing lip (13) is deformed radially outwards and bears against the housing wall (10) with sealing preload when the retaining ring (6) is installed in the housing wall (10).

2. The sealing grommet arrangement according to one of the preceding claims,
**characterised in that** the retaining ring (6) is in contact with the inner contour (8) of its through-opening (7) in the corrugation trough (2) of the sealing grommet (1).

3. The sealing grommet arrangement according to claim 2,
**characterised in that** the through-opening (7) of the retaining ring (6) has a circular contour.

4. The sealing grommet arrangement according to one of claims 2 and 3,
**characterised in that** the retaining ring (6) bears with the inner contour (8) of its through-opening (7) with prestress against the outer contour of the corrugation trough (2).

5. The sealing grommet arrangement according to one of the preceding claims,
**characterised in that** the sealing grommet (1) has a gripping contour at one of its end regions, on which the sealing grommet (1) can be gripped and axially force-loaded.

6. The sealing grommet arrangement according to one of the preceding claims,
**characterised in that** the retaining ring (6) is provided on its outer radially surrounding region with a connecting structure which can be connected to the housing wall (10).

7. The sealing grommet arrangement according to claim 6,
**characterised in that** the connecting structure is a radially surrounding, radially outwardly open annular groove (9) which has a groove width corresponding to the wall thickness of the housing wall (10) and a diameter at the bottom (11) of the annular groove (9) corresponding to the diameter of the opening (12) in the housing wall (10).

8. The sealing grommet arrangement according to claim 7,
**characterised in that** the retaining ring (6) consists of an elastically deformable material, and the retaining ring (6) can be latched with its annular groove (9) into the opening (12) of the housing wall (10).

## Revendications

1. Agencement de passe-câble d'étanchéité avec un passe-câble d'étanchéité (1) conçu comme un tube ondulé de diamètre extérieur constant sur sa longueur,
a. qui dépasse avec une extrémité d'une ouverture (12) dans une paroi de boîtier (10) et
b. sur laquelle est disposée une bague de retenue (6) pour maintenir le passe-câble d'étanchéité (1) sur la paroi de boîtier (10), qui fait saillie radialement vers l'intérieur avec le contour intérieur de son ouverture de passage (7) dans un creux (2) du passe-câble d'étanchéité (1) et qui peut être reliée à la paroi de boîtier (10) de manière à obturer l'ouverture (12) dans la paroi de boîtier (10),
c. la bague de retenue (6) présentant une ouverture de passage (7) centrale dont le contour intérieur (8) fait saillie dans un creux (2) du passe-câble d'étanchéité (1),
d. le passe-câble d'étanchéité (1) étant constituée d'un matériau élastiquement déformable de telle sorte que la bague de retenue (6) peut être déplacée, sous l'effet d'une force axiale minimale déterminée, d'un creux (2) dans un creux (2) adjacent en déformant de manière élastique le passe-câble d'étanchéité (1),
e. la bague de retenue (6) présentant sur sa périphérie extérieure radiale une lèvre d'étanchéité (13) radiale,
f. la lèvre d'étanchéité (13) étant élastique et reliée par sa partie radialement intérieure (14) à la paroi de rainure (15) de la rainure annulaire (9) éloignée de la paroi de boîtier (10),
**caractérisé en ce que**
g. la lèvre d'étanchéité (13) est inclinée vers la paroi de boîtier (10) avec sa partie projetant librement, radialement vers l'extérieur lorsque la bague de retenue (6) n'est pas montée dans la paroi de boîtier (10), et
h. la lèvre d'étanchéité (13) est déformée vers l'extérieur dans le sens radial et s'appuie avec une précontrainte d'étanchéité contre la paroi de boîtier (10) lorsque la bague de retenue (6) est montée dans la paroi de boîtier (10).

2. Dispositif de passe-câble d'étanchéité selon l'une des revendications précédentes,
**caractérisé en ce que** la bague de retenue (6) est en appui avec le contour intérieur (8) de son ouverture de passage (7) dans le creux (2) du passe-câble d'étanchéité (1).

3. Dispositif de passe-câble d'étanchéité selon la revendication 2,
**caractérisé en ce que** l'ouverture de passage (7) de la bague de retenue (6) présente un contour circulaire.

4. Dispositif de passe-câble d'étanchéité selon l'une des revendications 2 et 3,
**caractérisé en ce que** la bague de retenue (6) est en appui avec précontrainte contre le contour extérieur du creux (2) avec le contour intérieur (8) de son ouverture de passage (7).

5. Dispositif de passe-câble d'étanchéité selon l'une des revendications précédentes,
**caractérisé en ce que** le passe-câble d'étanchéité (1) présente, au niveau de l'une de ses zones d'extrémité, un contour de saisi au niveau duquel le passe-câble d'étanchéité (1) peut être saisi et soumis à une force axiale.

6. Dispositif de passe-câble d'étanchéité selon l'une des revendications précédentes,
**caractérisé en ce que** la bague de retenue (6) est pourvue, sur sa zone extérieure radiale périphérique, d'une structure de liaison pouvant être reliée à la paroi de boîtier (10).

7. Dispositif de passe-câble d'étanchéité selon la revendication 6,
**caractérisé en ce que** la structure de liaison est une rainure annulaire (9) périphérique radiale, ouverte radialement vers l'extérieur, qui présente une largeur de rainure correspondant à l'épaisseur de la paroi de boîtier (10) et un diamètre au fond (11) de la rainure annulaire (9) correspondant au diamètre de l'ouverture (12) dans la paroi de boîtier (10).

8. Dispositif de passe-câble d'étanchéité selon la revendication 7,
**caractérisé en ce que** la bague de retenue (6) est constituée d'un matériau élastiquement déformable, et que la bague de retenue (6) peut s'encliqueter avec sa rainure annulaire (9) dans l'ouverture (12) de la paroi de boîtier (10).
